(19) **Europäisches Patentamt**

**European Patent Office**

**Office européen des brevets**

(11) Veröffentlichungsnummer: **0 186 885**
**B1**

(12) **EUROPÄISCHE PATENTSCHRIFT**

(45) Veröffentlichungstag der Patentschrift:
14.11.90

(51) Int. Cl.⁵: **B01J 37/00**

(21) Anmeldenummer: 85116436.8

(22) Anmeldetag: 21.12.85

(54) **Verfahren zur Aktivierung und Stabilisierung von Katalysatormassen.**

(30) Priorität: 29.12.84 DE 3447782

(43) Veröffentlichungstag der Anmeldung:
09.07.86 Patentblatt 86/28

(45) Bekanntmachung des Hinweises auf die Patenterteilung:
14.11.90 Patentblatt 90/46

(84) Benannte Vertragsstaaten:
AT BE CH DE FR GB IT LI NL

(56) Entgegenhaltungen:
FR-A- 1 555 015
FR-A- 2 180 652
US-A- 3 379 635

(73) Patentinhaber: Henkel Kommanditgesellschaft auf
Aktien, Postfach 1100 Henkelstrasse 67,
D-4000 Düsseldorf-Holthausen(DE)

(72) Erfinder: Kubersky, Hans Peter, Dr., Hasselstrasse 60,
D-5650 Solingen(DE)
Erfinder: Rollberg, Hans Georg, Marconistrasse 11,
D-4000 Düsseldorf 13(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Stückige Katalysatormassen, die insbesondere in Form von Tabletten, Strangpresslingen oder in anderer Weise pelletiert vorliegen und vor ihrem Einsatz durch eine Behandlung in reduzierender Atmosphäre - insbesondere in Wasserstoff oder in einem Wasserstoff enthaltenen Gasgemisch - aktiviert werden, werden in der Technik in großem Umfang eingesetzt. Meist handelt es sich hierbei um Massen aus ein oder mehreren katalytisch aktiven Komponenten, wobei gegebenenfalls auch inerte Trägermaterialien mitverwendet werden können. Bekannt sind insbesondere entsprechende Metall- und Metallträgerkatalysatoren, die für vielfältige Hydrierprozesse benötigt und eingesetzt werden. Katalysatoren dieser Art zeigen in ihrer Aktivität häufig eine beträchtliche Empfindlichkeit gegenüber Luftzutritt, die bis zu pyrophorem Verhalten gehen kann. Herstellung, gegebenenfalls Lagerung und Transport sowie der Einsatz dieser Katalysatoren stellen dementsprechend erhöhte Anforderungen.

In der Praxis sind unterschiedliche Möglichkeiten zur Bewältigung der Problematik bekannt: Die in situ-Aktivierung stückiger Katalysatoren im Reaktor unmittelbar vor ihrem Einsatz aus formgestalteten stückigen Katalysator-Vormassen oder die Passivierung des aktivierten Katalysators durch partielle Reoxidation. Bekannt ist auch die Konservierung pulverförmiger Katalysatoren in ihrer Aktivform durch Umhüllung und/oder Imprägnierung mit einer Schutzmasse, die beim Einsatz der Katalysatoren aus der Masse wieder ausgetragen wird. Vielfach wird bei katalytischen Verfahren der hier betroffenen Art die in situ-Aktivierung der Katalysatorfüllung eines Reaktors vorgezogen, obwohl damit beträchtliche Verluste der Hydrierkapazität einer Anlage und technische Risiken verbunden sind.

Die von Einsatzort und -zeitpunkt getrennte Herstellung luftempfindlicher aktiver Katalysatoren findet in der Praxis in begrenztem Umfang statt. Bekannt ist insbesondere die Stabilisierung von Nickel-Hydrierkatalysatoren durch Tränken mit Hartfett, Hartparaffin, Fettamin oder ähnlichen Produkten. So beschreibt beispielsweise die DD-PS 150 390 ein Verfahren zur Herstellung von Katalysatoren, die aus pyrophorem Metall, gegebenenfalls auf anorganischen Trägern bestehen und mit über 313°K schmelzenden Stoffen imprägniert sind. Nach diesem Verfahren sollen die geschmolzenen Suspensionen von Katalysator und Imprägniermittel durch Versprühung und gleichzeitige Abkühlung in eine feinkörnige, gut rieselfähige, luftstabile Form überführt werden. In der FR-PS 1 555 015 werden pulverförmige Raney-Nickel-Katalysatoren beschrieben, die mit einer Schutzschicht überzogen sind, welche durch Materialien mit Schmelzpunkten im Bereich von 60 bis 100°C gebildet wird und insbesondere hydrierte vegetabilische Öle, Fettsäuren bzw. Fettsäuresalze, Glykole, andere polyfunktionelle Alkohole oder organische Polymersubstanzen sind. Diese vor Luftzutritt schützenden schmelzfähigen Feststoffschichten sollen mit Hilfe eines Lösungsmittels auf die Katalysatormassen aufgebracht werden.

In der US-PS 3 379 635 ist ein Verfahren zur Konservierung von Raney-Metallkatalysatoren beschrieben, bei dem die aus der entsprechenden Kobalt-, Nickel- oder Eisen/Aluminiumlegierung durch Auslangen mit Alkalimetallhydroxidlösungen hergestellten Katalysatorschichten mit polyvalenten aliphatischen Alkoholen wie Ethylenglykol, Propylenglykol, Glycerin oder höheren aliphatischen polyvalenten Alkoholen getränkt werden.

Die Erfindung geht von der Aufgabe aus, ein verbessertes und allgemein anwendbares Verfahren zu entwickeln, mit dessen Hilfe die Herstellung und Stabilisierung von sowohl stückigen als auch feinzerteilten, insbesondere pulverförmigen Katalysatormassen in hochaktiver Form ermöglicht wird. Angestrebt wird insbesondere eine wochenlange oder gar monatelange Lagerfähigkeit der Katalysatormassen unter Normalbedingungen, insbesondere auch unter Luftzutritt, obwohl die Aktivkatalysatoren an sich ohne die erfindungsgemäße Stabilisierung nur begrenzte oder – beispielsweise im Fall von pyrophoren Katalysatormassen – keine Lagerfähigkeit unter Normalbedingungen besitzen. Die Erfindung will damit insbesondere die externe Katalysatorherstellung und Aktivierung ermöglichen, d.h. die Trennung von Einsatzort und Ort der Katalysatorherstellung erreichen, so daß damit die beiden folgenden wesentlichen Vorteile zugänglich werden:

1. Entlastung der die Katalysatorfüllung benötigenden Produktionsanlage von der Katalysatoraktivierung und damit bedeutende Steigerung der Produktionskapazität der Anlage sowie
2. Möglichkeit zur Einstellung optimaler Parameter bei der Katalysatorherstellung und damit Herstellung von Katalysatoren maximaler Aktivität.

Gegenstand der Erfindung ist dementsprechend ein Verfahren zur Herstellung von im Aktivzustand stabilisierten Katalysatormassen durch Aktivierung von Katalysatorausgangsmassen in einer reduzierenden Gasphase, anschließende Stabilisierung dieser Aktivkatalysatoren durch Imprägnieren mit der Schmelze eines dem Aktivkatalysator gegenüber inerten Feststoffs und nachfolgendes Verfestigen der Schmelzimprägnierung durch Abkühlen, das dadurch gekennzeichnet ist, daß man zur Herstellung eines gegebenenfalls metallische Hydrierkomponenten enthaltenden aktivierten stückigen Katalysators für die Reduktion von Fettsäureestern und/oder Fettsäuren eine stückige Katalysatorausgangsmasse, die als aktive Komponente mindestens ein Oxid, Hydroxid, Carbonat oder basisches Carbonat eines Metalls aus der aus Kupfer, Zink, Chrom und Aluminium bestehenden Gruppe enthält, unter den Reaktionsbedingungen der Aktivierungsstufe durch eine mit der reduzierenden Gasphase erfüllte Reaktionszone führt, die in unmittelbarem Kontakt mit einer aus einem Fettalkohol oder einem Fettalkoholgemisch mit einem Schmelzpunkt von mindestens 40°C bestehenden Schmelze eines imprägnierenden Feststoffes steht, die aktivierte Katalysatormasse in diese Schmelze einführt, daraus wieder entnimmt und den geschmolzenen Feststoff erstarren läßt und gewünschtenfalls die imprägnierte Katalysatormasse zerkleinert.

Es hat sich insbesondere als zweckmäßig erwiesen, die üblicherweise bei erhöhten Temperaturen in der reduzierenden Gasphase aktivierte Katalysatormasse noch heiß unmittelbar in ein kühleres Schmelzbad des imprägnierenden Feststoffes einzuführen, wobei es weiterhin bevorzugt ist, eine möglichst rasche Durchtränkung des einzelnen stückigen Katalysatorteilchens mit der Schmelzflüssigkeit zu bewirken. Am einfachsten wird das dadurch erreicht, daß man das aus der Reduktionsstufe noch heiße stückige Katalysatormaterial unmittelbar in das kühlere Schmelzbad des imprägnierenden Feststoffs fallen läßt.

Es hat sich gezeigt, daß es auf diese Weise möglich wird, in vergleichsweise kurzer Zeit eine durchdringende Imprägnierung des hochaktiven Katalysatorfeststoffteilchens mit der Schmelze des imprägnierenden Feststoffs zu bewirken. Verantwortlich hierfür ist möglicherweise neben der Saugwirkung der Kapillarstruktur die rasche Abkühlung des heißen Katalysatorteilchens in der Schmelzflüssigkeit des kühleren Imprägnierbades und der damit ausgelöste Unterdruck-Sog im Inneren der Katalysatorfeststoffteilchen. Das Ergebnis des erfindungsgemäßen Verfahrens ist jedenfalls ein Katalysatormaterial, das staubfrei ist, eine bedeutend höhere Festigkeit als das nichtimprägnierte Aktivmaterial aufweist und das sich in der Regel wochen- oder gar monatelang an der Luft lagern läßt, ohne sich merklich zu verändern. Wird in der Anfangsphase des Einsatzes solcher Katalysatormassen die Schmelzimprägnierung aus dem Katalysator in geeigneter Weise ausgetrieben, kommt die volle Aktivität dieser Katalysatoren auch noch nach langen Aufbewahrungszeiten zur Ausbildung.

Die im erfindungsgemäßen Verfahren zum Einsatz kommenden stückigen Katalysator-Ausgangsmassen, die erfindungsgemäß in der ersten Verfahrensstufe in an sich bekannter Weise durch Behandlung mit einem reduzierenden Gasstrom zum Aktivkatalysator umgewandelt werden, sind die im Stand der Technik ausführlich beschriebenen Stoffgemische auf Basis verschiedenartigster Metallverbindungen, wobei insbesondere entsprechende Oxide, Hydroxide, Carbonate, basische Carbonate und dergleichen in der Praxis Bedeutung haben. Diese Stoffe bzw. Stoffgemische werden im allgemeinen durch Tablettierung, Strangpressen oder Pelletisieren zu festen Formteilen umgewandelt, die dann letztlich durch Reduktion in die Aktivkatalysatoren umgewandelt werden.

Der Begriff des stückigen Katalysatormaterials bzw. der stückigen Katalysator-Ausgangsmasse im Sinne der erfindungsgemäßen Definition erfaßt damit entsprechende Formkörper beträchtlicher Größe, die sich von üblichen Pulvern deutlich unterscheiden. Durchschnittliche Teilchengrößen eines solchen stückigen Katalysatormaterials liegen insbesondere im Bereich von etwa 0.5 bis 20 mm, vorzugsweise von etwa 2 bis 10 mm und insbesondere im Bereich von etwa 3 bis 8 mm. Die Raumform des stückigen Katalysatormaterials kann dabei regelmäßig oder unregelmäßig geformt sein. Wesentlich ist, daß das Verfahren der Erfindung nicht von pulverförmigen sondern von vergleichsweise großen bzw. groben Materialstücken der angegebenen Abmessungsbereiche ausgeht.

Lediglich beispielhaft sei aus dem umfangreichen Stand der Technik verwiesen auf die Herstellung eines Katalysators zur Hydrierung von Nitrilen nach US-PS 4,007,226 durch Vermischen von Cobaltoxid mit Natriumsilikat, Formgebung des Gemisches durch Tablettieren, Pelletisieren oder Extrudieren, Trocknen und Reduzieren mit Wasserstoff bei 300 bis 500°C.

In der DE-AS 12 66 295 wird die Herstellung eines zur Hydrierung von Fettsäuren zu Fettalkoholen geeigneten Katalysators beschrieben. Dazu werden die Carbonate von Kupfer und Zink mit Chromsäure umgesetzt, das Reaktionsprodukt zu Tabletten gepreßt und mit Wasserstoff reduziert.

Die DE-OS 23 20 192 beschreibt die Gewinnung eines zur Methanolsynthese aus Kohlenmonoxid und Wasserstoff einsetzbaren Katalysators durch Tablettieren eines Gemisches aus Kupferoxid, Zinkoxid und Aluminiumoxid und Aktivieren der Tabletten bei 250 °C in einem Gastrom aus 5 Vol. % Wasserstoff und 95 Vol. % Stickstoff bei Normaldruck.

Schließlich seien noch eisenhaltige Katalysatoren zur Ammoniaksynthese genannt, die z.B. durch Auflösen von Promotoroxiden ($Al_2O_3$, $MgO$, $CaO$, $K_2O$ u.a.) in geschmolzenem Magnetit ($Fe_3O_4$), Erkalten lassen der Schmelze, Zerkleinern durch Brechen und Reduktion mit Wasserstoff hergestellt werden können (Ullmanns Encyklopädie der technischen Chemie, 4. Auflage, Band 7, Seite 468-470, Verlag Chemie, Weinheim).

Auch die Einzelheiten der Aktivierung - d.h. insbesondere die Verfahrensbedingungen der Aktivierungsstufe wie Temperatur und Druck, die dabei einzusetzende reduzierende Gasphase, die in der Regel Wasserstoff oder ein Wasserstoff enthaltendes Gemisch ist und dergleichen - sind im Stand der Technik ausführlich beschrieben, insoweit gelten für das erfindungsgemäße Verfahren die allgemeinen Gesetzmäßigkeiten. Auch hier sei lediglich beispielshaft verwiesen auf die EP-OS 0 044 412, in der die Aktivierung einer aus Kupferoxid und Zinkoxid bestehenden Kalatlysatorvorstufe durch drucklose Reduktion mit einem Gemisch aus 0,5 bis 30 Volumenteilen Wasserstoff und 99,5 bis 70 Volumenteilen Stickstoff bei Temperaturen von 150 bis 250 °C beschrieben wird.

Das Charakteristische der Erfindung liegt in der besonderen Weise, wie unter Benutzung dieses allgemeinen Wissens des Fachmannes in externem Verfahren gezielt eine optimale Herstellung von Aktivkatalysatoren gleichbleibender und maximaler Aktivität möglich und ihre anschließende, zeitlich praktisch unbegrenzte Stabilisierung zugänglich werden. In einer bevorzugten Ausführungsform der Erfindung wird dabei das stückige Katalysator-Ausgangsmaterial in ruhender Schichtlage durch die gaserfüllte Aktivierungsstufe geführt. Hierzu wird das Katalysator-Stückgut zweckmäßigerweise auf einen flächigen, insbesondere bandförmigen oder netzartigen Träger aufgebracht und in ruhender Schichtlage durch die Aktivierungsstufe geführt. In einer bevorzugten Ausführungsform ist der flächige Träger innerhalb der ·mit reduzierender Gasphase erfüllten Aktivierungsstufe angeordnet und läuft dort um. Wird das stückige Katalysator-Ausgangsmaterial beispielsweise an dem einen Ende dieses umlaufenden Trägers aufgebracht, dann werden die Reaktionsbedingungen und die Umlaufgeschwindigkeit des flächigen Trägers derart aufeinander abgestimmt, daß der in ruhender Schichtlage transportierte Katalysator beim Erreichen des anderen Endes des Trägerbandes den optimalen Aktivierungszustand erreicht hat. Dieser Transport in ruhender Schichtlage bringt einen beträchtlichen Vorteil: Bei der reduzierenden Umwandlung der Katalysator-Ausgangsmasse zum Aktivkatalysator wird im allgemeinen die Tablettenfestigkeit des Stückgutes stark vermindert, so daß bei mechanischer Bewegung ein beträchtlicher Anteil an Abrieb auftritt bzw. anteilweise die stückigen Katalysatormassen auch zu Bruch gehen können. Durch den Transport des Katalysatormaterials in ruhender Schichtlage durch die Aktivierungszone hindurch wird das vermieden.

In einer weiteren Ausführungsform der Erfindung ist es bevorzugt, die Dicke der auf dem flächigen Träger vorgesehenen Lage des stückigen Katalysatormaterials zu beschränken. Erfindungsgemäß wird das immer dann von Bedeutung sein, wenn die Gefahr besteht, daß bei der reduktiven Aktivierung der Katalysatormassen exotherme Reaktionen zu einer Überhitzung des Katalysators führen können. Derartige thermische Belastungen führen bekanntlich zu einer Verminderung der Aktivität des Katalysators bis hin zur völligen Inaktivität. Bekannt ist es, daß bei der in situ-Aktivierung von Katalysatorfestbetten in den Reaktoren ein unkontrollierter Temperaturanstieg stattfinden kann, der im ungünstigsten Fall mehrere hundert Grad betragen kann. In speziellen Fällen kommt es sogar zum Durchglühen des Katalysators. Durch Einschränkung der Schichtdicke des Katalysatormaterials auf dem in der Aktivierungszone bewegten Träger gelingt es, solche unerwünschten Reaktionen mit Sicherheit zu vermeiden. Es kann dementsprechend zweckmäßig sein, mit Schichtdicken nicht über 20 cm, vorzugsweise nicht über 10 cm, zu arbeiten, wobei für eine besondere, im folgenden noch geschilderte Katalysatorform das Arbeiten mit einer Schichtdicke nicht über 5 cm besonders geeignet sein kann.

Durch geeignete Variation der Verfahrensparameter, insbesondere also durch Abstimmung von Temperatur, Druck, Gaszusammensetzung und Verweilzeit des Katalysators gelingt es, in genau definierter Weise Bedingungen zu schaffen, die eine optimale Reduktion des jeweiligen Katalysatormaterials gewährleisten. Der reduzierte Aktivkatalysator wird dann, ohne daß er die Anlage verläßt und mit Sauerstoff in Berührung kommt in ein Tauchbad überführt, das die Schmelze des imprägnierenden Feststoffes enthält, der bei Raumtemperatur zum festen Zustand erstarrt. Der Katalysator wird durch das Tauchbad hindurchtransportiert, belädt sich dabei mit dem Stabilisierungsmittel und gelangt schließlich in eine Kühlzone, wo er in einer Inertgasatmosphäre auf Zimmertemperatur gebracht wird, wobei das Stabilisierungsmittel erstarrt. Der auf diese Weise reduzierte und stabilisierte Katalysator kann dann in Gebinde abgefüllt und bis zu seinem Einsatz beliebig lange gelagert werden.

In einer weiteren Ausführungsform der Erfindung ist anschließend an die Aktivierung und Stabilisierung des stückigen Katalysatorgutes dessen mechanische Zerkleinerung vorgesehen. Es wurde gefunden, daß sich das zuvor beschriebene aktivierte und stabilisierte Material hervorragend dazu eignet, pulverförmige Katalysatoren in aktivierter und stabilisierter Form herzustellen. Dazu werden die beschriebenen, durch Reduktion mit Wasserstoff aktivierten und durch Imprägnieren stabilisierten stückigen Katalysatormaterialien in einer geeigneten Mühle zu einem Pulver der gewünschten Formgröße gemahlen, wobei diese Vermahlung vorzugsweise unter Kühlung abläuft, damit das Imprägniermittel nicht aufschmilzt und insbesondere darüber hinaus spröde Konsistenz erhält. Die Vermahlung von Feststoffen unter Kühlung zur Erhöhung der Versprödungstendenz des Mahlgutes und damit zur Erleichterung der Zerkleinerung des Mahlgutes ist eine an sich bekannte Verfahrensmethodik, die in dieser Ausführungsform der Erfindung Verwendung finden kann. So ist es beispielsweise möglich, die Vermahlung bei Temperaturen bis zu minus 70 °C oder auch darunter vorzunehmen. Das erhaltene Pulver wird dann in Gebinde abgefüllt und ist in dieser Form auch bei Luftzutritt wochenlang lagerbar.

Es wird erfindungsgemäß bevorzugt, mit einem Temperaturintervall zwischen der Badtemperatur des imprägnierenden Feststoffs und Reaktionstemperatur in der Aktivierungsstufe von wenigstens 80°C und vorzugsweise von wenigstens etwa 120°C zu arbeiten. Da die hydrierende Aktivierung von Feststoffkatalysatoren der hier betroffenen Art im allgemeinen bei Temperaturen von etwa wenigstens 180°C, insbesondere im Temperaturbereich von etwa 200 - 350°C stattfindet, ist diese Verfahrensvariante mühelos zu verwirklichen. Das Tauchbad einer Imprägniermasse mit einem Schmelzpunkt von wenigstens etwa 40°C, vorzugsweise von wenigstens etwa 45°C, kann dann bei Temperaturen von beispielsweise 50 - 120°C gehalten werden. Das heiße frisch aktivierte Katalysatorstückgut fällt unmittelbar von dem Trägerband in das Tauchbad des imprägnierenden Feststoffes und wird vorzugsweise ebenfalls kontinuierlich aus diesem in die mit Inertgas erfüllte Kühlzone abgezogen.

in einer bevorzugten Ausführungsform ist auch innerhalb des Tauchbades der Imprägniermasse ein umlaufender bandförmiger Träger vorgesehen, der mit seinem einem Ende aus diesem Tauchbad herausläuft und in einen zweckmäßigerweise mit Inertgas erfüllten nachfolgenden Verfahrensabschnitt reicht. Die in das Tauchbad fallende Katalysatormasse wird auf den durch dieses Bad und die nachfolgende Inertgaszone umlaufenden Träger geführt. Dabei sind Umlaufgeschwindigkeit und Eintauchstrecke des Trägers in das Bad - und damit die Verweilzeit des Katalysatormaterials im getauchten Zustand - derart bestimmt, daß der angestrebte Zustand an Durchimprägnierung sichergestellt ist.

Das erfindungsgemäße Verfahren kann besondere Bedeutung haben für die externe Herstellung von Katalysatoren für die Reduktion von Fettsäureestern und/oder Fettsäuren zu Fettalkoholen, insbesondere gesättigten Fettalkoholen. Bekanntlich wird zur Herstellung von solchen Fettalkoholen üblicherweise Fettsäuremethylester an einem festen Katalysator bei einer Temperatur von 200 - 250 °C und einem Druck von 200 - 300 bar mit Wasserstoff umgesetzt. Der Katalysator wird in stückiger Form, z. B. als Tabletten oder Granulat, in zylinderförmigen Reaktoren von mehreren Kubikmetern Inhalt zum Einsatz gebracht. Die Aktivierung des beispielsweise aus Oxiden, Hydroxiden, Carbonaten und/oder basischen Carbonaten von Kupfer und anderen Schwermetallen im Gemisch mit Promotoren bestehenden Katalysator-Ausgangsmaterials geschieht bisher dadurch, daß dieses stückige Katalysatorvormaterial zunächst in dem Reaktor, in dem später die Hydrierung vorgenommen wird, im Stickstoffstrom bei Temperaturen bis ca. 200°C getrocknet und dann durch Zuspeisen von Wasserstoff bei etwa der gleichen Temperatur reduziert wird. Der gesamte Vorgang dauert je nach eingesetzter Katalysatormenge 4 - 14 Tage. Anschließend ist der Katalysator aktiv und ist nun in der Lage, die Hydrierung von Fettsäureestern zu Fettalkoholen zu katalysieren. Gleichzeitig ist er jedoch pyrophor geworden, d.h. er kann nicht an der Luft gehandhabt werden ohne sofort in Brand zu geraten. Da auch die Tablettenfestigkeit durch die Reduktion stark vermindert ist, müssen Aktivierung und anschließende Esterhydrierung im selben Reaktor stattfinden. Das hat jedoch zur Folge, daß der Reaktor während der Aktivierungsphase für die Fettalkoholproduktion ausfällt. Große Hydrieranlagen verlieren auf diese Weise etwa 15% ihrer Kapazität.

Wird demgegenüber erfindungsgemäß das stückige Katalysator-Ausgangsmaterial im externen Verfahren zunächst reduziert, und anschließend dadurch stabilisiert, daß man den stückigen Aktivkatalysator noch unter Wasserstoffatmosphäre oder aber unter inerter Gasatomosphäre mit bei höherer Temperatur flüssigen, bei Raumtemperatur jedoch fest werdenden Fettalkoholen bzw. Fettalkoholgemischen tränkt, entfallen diese Nachteile. Die den bei Raumtemperatur erstarrten Fettalkohol enthaltenden Aktivkatalysatoren sind staubfrei, sie haben eine bedeutend höhere Festigkeit als nicht mit Fettalkohol getränkte reduzierte Tabletten bzw. Granulate und lassen sich monatelang an der Luft lagern, ohne sich merklich zu verändern.

Zum Stabilisieren der Aktivkatalysatoren eignen sich insbesondere Fettalkoholgemische, die als "Talgalkohol" bekannt sind, jedoch lassen sich auch Fettalkohole mit einheitlicher Kettenlänge wie Cetylalkohol, Stearylalkohol oder Behenylalkohol verwenden. Wie bereits angegeben, bringen Fettalkohole den Vorzug, daß durch sie bei der anschließenden bestimmungsmäßigen Verwendung des Katalysators keine artfremden Substanzen als Verunreinigung in den produzierten Fettalkohol gelangen.

Neben den zur Herstellung von Fettalkoholen eingesetzten Katalysatoren lassen sich auch andere feste Katalysatoren, die vor ihrer Verwendung durch Reduktion mit Wasserstoff aktiviert werden müssen und dann luftempfindlich sind, in der erfindungsgemäßen Weise durch Tränken mit Fettalkoholen stabilisieren. Solche Katalysatoren sind z. B. die zur Methanolsynthese nach dem Niederdruckverfahren eingesetzten Kupfer/Zinkoxid- bzw. Kupfer/Zinkoxid/Aluminiumoxid (Chromoxid)-Kontakte.

Die Vorteile des erfindungsgemäßen Verfahrens - insbesondere die Entlastung der Hydrieranlage von der Katalysator-Aktivierung und die Möglichkeit zur Einstellung optimaler Parameter bei der Katalysatorreduktion - kommen auch dann zum Tragen, wenn in der Reduktionsanlage solche Hydrierkatalysatoren aktiviert werden, die durch die Reduktion nicht luftempfindlich oder sogar pyrophor werden. Derartige Katalysatoren sind z. B. zur Herstellung ungesättigter Fettalkohole aus ungesättigten Fettsäuremethylestern verwendete kupferfreie Chromkatalysatoren oder zur Herstellung von gesättigten Fettalkoholen durch Direkthydrierung von Fettsäuren eingesetzte kupferhaltige Chromkatalysatoren.

Typische Verfahrensbedingungen zur Reduktion eines stückigen Katalysator-Vormaterials in der Reduktions- bzw. Aktivierungsstufe sind beispielsweise:
Zusammensetzung des Reduktionsgemisches: 30 bis 60 Volumenteile Wasserstoff und 70 bis 40 Volumenteile Stickstoff.
Temperatur:
180 bis 250 °C
Druck: 1 bar
Verweilzeit in der Reduktionszone: 1 bis 3 Stunden.

Diese Bedingungen beziehen sich auf einen kupferhaltigen Katalysator zur Herstellung von gesättigten Fettalkoholen aus Fettsäureestern. Sie können jedoch ohne Nachteile im Rahmen des allgemeinen Fachwissens auch abgewandelt werden. Beispielsweise läßt sich als Reduktionsgas auch reiner Wasserstoff verwenden.

Bei der Herstellung anderer Katalysatoren kann es bekanntlich nötig sein, die Reduktionsbedingungen noch stärker zu verändern. So wird ein chromhaltiger Katalysator für die Herstellung von ungesättigten Fettalkoholen bei Temperaturen von 250 bis 320 °C und einer Verweilzeit in der Reduktionszone von 4 bis 8 Stunden aktiviert.

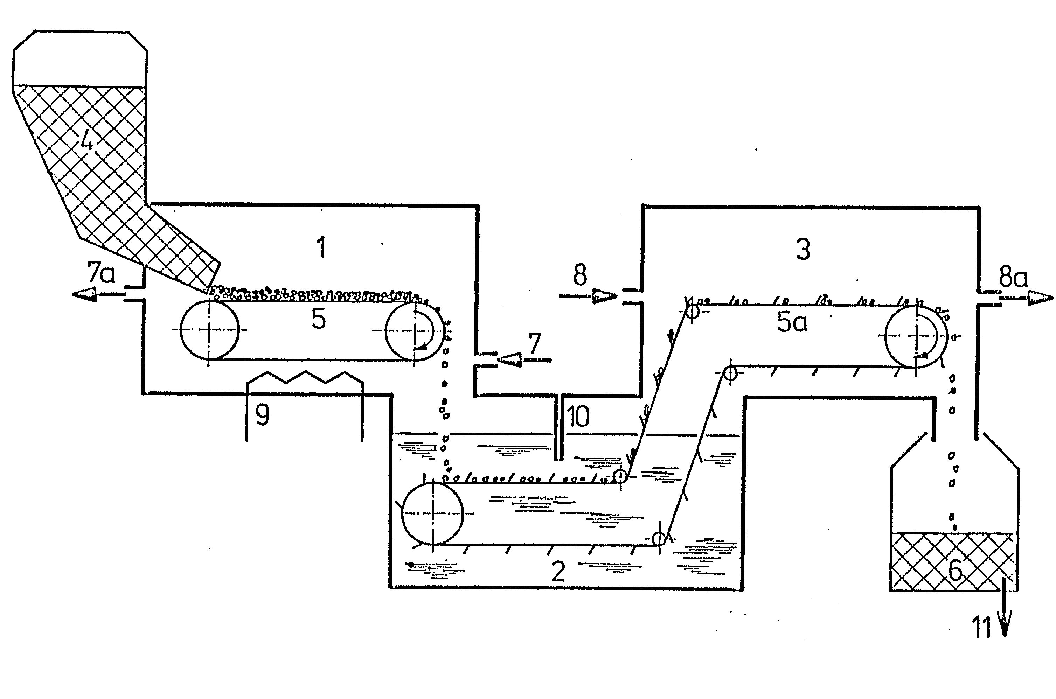

In der beigefügten Zeichnung ist der prinzipielle Aufbau einer kontinuierlich arbeitenden Reduktionsanlage im erfindungsgemäßen Sinne dargestellt. Hier gelten im folgenden die einzelnen Angaben:

Stückiges unreduziertes Katalysatorausgangsmaterial (unreduzierte Katalysatorvorstufe) 4 wird in den Reduktionsraum 1 eingeführt, der durch Zuleitung 7 und über Ableitung 7 a mit einer reduzierenden Gasphase - insbesondere Wasserstoff oder Wasserstoff/Inertgasgemische - durchspült wird. Das stückige Katalysatorausgangsmaterial 4 wird auf ein erstes Förderband 5 aufgetragen und dort in vorbestimmter Schichtdicke von beispielsweise 5 bis 10 cm Höhe gelagert und auf diesem Förderband durch den Reduktionsraum 1 transportiert. Die Temperatur des Reduktionsraums 1 wird über das Heizelement 9 gesteuert. Die Transportgeschwindigkeit des Katalysatormaterials ist in Abstimmung mit den sonstigen Verfahrensbedingungen in dem Reduktionsraum 1 so abgestimmt, daß der in vorbestimmtem Ausmaß aktivierte Katalysator das Förderband verläßt. Er fällt in das unmittelbar mit dem Reduktionsraum in räumlicher Verbindung stehende Tauchbad 2, das mit geschmolzener Imprägnierflüssigkeit gefüllt ist. Die Sperrplatte 10 trennt dabei die Oberfläche dieses Tauchbades in zwei Bereiche. Der linke Bereich steht in unmittelbarem Kontakt mit dem Reduktionsraum 1, der rechte Bereich führt in die Kühlzone 3. Ein Förderband 5 a läuft durch das Tauchbad 2 und die Kühlzone 3. Der vom Förderband 5 in das Tauchbad 2 fallende Katalysator fällt auf das Transportband 5 a und verbleibt solange in diesem Tauchbad bis die erfindungsgemäß gewünschte durchdringende Imprägnierung des stückigen Katalysatormaterials stattgefunden hat. Dann verläßt das mit Katalysatorgut geladene Förderband 5 a das Tauchbad 2 und läuft durch die Kühlzone 3, in der das flüssige Imprägniermittel aus 2 im Aktivkatalysator erstarrt und ihn damit gegen Luftzutritt stabilisiert. Das in dieser Form erkaltete stabilisierte aktive Katalysatormaterial 6 wird gesammelt und kann über 11 entnommen und gewünschtenfalls einer Zerkleinerungsvorrichtung, beispielsweise einer gekühlten Mahlvorrichtung zugeführt werden. Genauso kann aber das stückige Katalysatormaterial als solches verpackt und einer beliebigen Lagerung zugeführt werden. Die Kühlzone 3 wird über 8 und 8 a mit Inertgas durchspült.

Beispiel

Als Ausgangsmaterial diente die aus CuO, ZnO und $Al_2O_3$ im Gewichtsverhältnis 50:40:10 bestehende Vorstufe eines für die Methanolsynthese aus Kohlenmonoxid und Wasserstoff geeigneten Katalysators. Dieses Material war dadurch erhalten worden, daß in bekannter Weise eine Kupfernitrat, Zinknitrat und γ-Aluminiumoxid enthaltende Lösung bei 90°C bis zu einem pH-Wert von 7 mit einer Natriumcarbonatlösung versetzt, der entstandene Niederschlag abfiltriert, gewaschen, getrocknet und bei 350°C kalziniert wurde. Das auf diese Weise gewaschene Pulver wurde zu zylindrischen Tabletten von 5 mm Höhe und 5 mm Durchmesser verpreßt. Die Aktivierung der Katalysatortabletten erfolgte in einer kontinuierlich arbeitenden Reduktionsanlage gemäß vorstehender Beschreibung. Die Tabletten wurden aus einem Vorratsbehälter auf das durch die Reduktionszone hindurchlaufende Förderband abgelassen. Die Geschwindigkeit des Förderbandes war dabei so eingestellt, daß die Verweilzeit der Tabletten in der Reduktionszone 2 1/2 Stunden betrug. Als Reduktionsgas wurde ein Gemisch aus 50 Vol.-% Wasserstoff und 50 Vol-% Stickstoff verwendet. Die Temperatur betrug im ersten Drittel der Reduktionszone 170°C, im zweiten Drittel 190°C und im dritten Drittel 210°C. Die Schichtdicke der Katalysatorschüttung auf dem Förderband überschritt an keiner Stelle zwei Tablettendurchmesser.

Nach dem Durchlaufen der Reduktionszone wurden die Tabletten in ein Tauchbad von auf 80°C erhitztem Talgalkohol abgelassen. Nach einer Verweilzeit von 5 Minuten wurden die mit Talgalkohol beladenen Tabletten mittels des dafür vorgesehenen Förderbandes aus dem Tauchbad ausgetragen und durch eine Kühlzone geführt, in der ihnen Stickstoff von 12°C entgegenströmte. Nach einer Verweilzeit in der Kühlzone von 20 Minuten war der von den Tabletten aufgenommene Talgalkohol vollkommen erstarrt und der Katalysator auf diese Weise gegen Luftzutritt geschützt.

Die auf diese Weise behandelten Katalysatortabletten behielten auch bei monatelanger Lagerung an der Luft ihre volle katalytische Aktivität.

**Patentansprüche**

1. Verfahren zur Herstellung von im Aktivzustand stabilisierten Katalysatormassen durch Aktivierung von Katalysatorausgangsmassen in einer reduzierenden Gasphase, anschließende Stabilierung dieser Aktivkatalysatoren durch Imprägnieren mit der Schmelze eines dem Aktivkatalysator gegenüber inerten Feststoffs und nachfolgendes Verfestigen der Schmelzimprägnierung durch Abkühlen, dadurch gekennzeichnet, daß man zur Herstellung eines gegebenenfalls metallische Hydrierkomponenten enthaltenden aktivierten stückigen Katalysators für die Reduktion von Fettsäureestern und/oder Fettsäuren eine stückige Katalysatorausgangsmasse, die als aktive Komponente mindestens ein Oxid, Hydroxid, Carbonat oder basisches Carbonat eines Metalls aus der aus Kupfer, Zink, Chrom und Aluminium bestehenden Gruppe enthält, unter den Reaktionsbedingungen der Aktivierungsstufe durch eine mit der reduzierenden Gasphase erfüllte Reaktionszone führt, die in unmittelbarem Kontakt mit einer aus einem Fettalkohol oder einem Fettalkoholgemisch mit einem Schmelzpunkt von mindestens 40°C bestehenden Schmelze eines imprägnierenden Feststoffes steht, die aktivierte Katalysatormasse in diese Schmelze einführt, daraus wieder entnimmt und den geschmolzenen Feststoff erstarren läßt und gewünschtenfalls die imprägnierte Katalysatormasse mechanisch zerkleinert.

2. Verfahren nach Anspruch 1, dadurch gekennzeichnet, daß man die bei erhöhten Temperaturen aktivierte Katalysatormasse heiß in ein kühleres Schmelzbad des imprägnierenden Feststoffs einführt und solange darin beläßt, bis eine durchdringende Imprägnierung der Katalysatorteilchen eingetreten ist.

3. Verfahren nach Ansprüchen 1 und 2, dadurch gekennzeichnet, daß man mit einem Temperaturintervall zwischen Aktivierung und Imprägnierung von wenigstens 80°C, vorzugsweise von wenigstens 120°C arbeitet.

4. Verfahren nach Ansprüchen 1 bis 3, dadurch gekennzeichnet, daß man das stückige Katalysatormaterial, vorzugsweise in Form von Tabletten, Strangpreßlingen oder in anderer Weise pelletiert, in ruhender Schichtlage durch die gaserfüllte Aktivierungszone führt, wobei vorzugsweise mit Schichtdicken des stückigen Katalysatormaterials nicht über 10 cm, insbesondere nicht über 5 cm gearbeitet wird.

5. Verfahren nach Ansprüchen 1 bis 4, dadurch gekennzeichnet, daß man das stückige Katalysator-Ausgangsmaterial in dünner Schichtlage auf einen flächigen Träger aufgibt, der in einem mit reduzierender Gasphase erfüllten und auf Temperaturen von etwa 200–350°C erhitzten Reaktionsraum umläuft, die heiße aktivierte Katalysatormasse unmittelbar in ein bei Temperaturen von etwa 50–120°C gehaltenes Schmelzbad des Imprägniermittels fallen läßt, das durchdringend imprägnierte Katalysatormaterial vorzugsweise ebenfalls kontinuierlich in eine mit Inertgas erfüllte Kühlzone abzieht und dort bis zum Erstarren der Imprägnierung hält.

6. Verfahren nach Ansprüchen 1 bis 5, dadurch gekennzeichnet, daß die in das Imprägnierbad fallende Katalysatormasse auf einen durch dieses Bad und die nachfolgende Inertgaszone umlaufenden Träger geführt wird, dessen Umlaufgeschwindigkeit und Eintauchstrecke in das Bad die Verweilzeit des Katalysatormaterials im Imprägnierbad bestimmen.

7. Verfahren nach Ansprüchen 1 bis 6, dadurch gekennzeichnet, daß man die mechanische Zerkleinerung des mit erstarrter Imprägniermasse stabilisierten Aktivkatalysators unter Bedingungen durchführt, die ein unerwünschtes Aufschmelzen der Imprägniermasse ausschließen.

8. Verfahren nach Ansprüchen 1 bis 7, dadurch gekennzeichnet, daß man tablettiertes, granuliertes oder in anderer Weise pelletiertes Katalysator-Ausgangsmaterial einsetzt.

9. Verfahren nach Ansprüchen 1 bis 8, dadurch gekennzeichnet, daß man Fettalkohole mit Schmelzpunkten von wenigstens etwa 45°C einsetzt.

10. Verfahren nach Ansprüchen 1 bis 9, dadurch gekennzeichnet, daß man eine stückige Katalysator-Ausgangsmasse einsetzt, deren durchschnittliche Teilchengrößen deutlich oberhalb Pulvergröße und insbesondere im Bereich von etwa 0,5 bis 20 mm, vorzugsweise im Bereich von etwa 2 bis 10 mm liegen.

**Claims**

1. A process for the production of catalyst compositions stabilized in their active form by activation of starting catalyst compositions in a reducing gas phase, subsequent stabilization of the active catalysts by impregnation with a melt of a solid which is inert to the active catalyst and subsequent solidification of the melt impregnation by cooling, characterized in that, to produce an activated particulate catalyst optionally containing metallic hydrogenation components for the reduction of fatty acid esters and/or fatty acids, a particulate starting catalyst composition containing as active component at least one oxide, hydroxide, carbonate or basic carbonate of a metal from the group consisting of copper, zinc, chromium and aluminium is passed under the reaction conditions of the activation stage through a reaction zone which is filled with the reducing gas phase and which is in direct contact with a melt of an impregnating solid which consists of a fatty alcohol or fatty alcohol mixture having a melting point of at least 40°C, the activated catalyst composition is introduced into this melt and then removed therefrom, the molten solid is allowed to solidify and, if desired, the impregnated catalyst composition is mechanically size reduced.

2. A process as claimed in claim 1, characterized in that the catalyst material activated at elevated temperatures is introduced while still hot into a cooler melt bath of the impregnating solid and is left therein until thorough impregnation of the catalyst particles has taken place.

3. A process as claimed in claims 1 and 2, characterized in that the temperature difference between activation and impregnation is at least 80°C and preferably at least 120°C.

4. A process as claimed in claims 1 to 3, characterized in that the particulate catalyst material, preferably in the form of tablets, extrudates or otherwise pelletized, is passed through the gas-filled activation zone in the form of a static layer, the layer thickness of the particulate catalyst material preferably being no greater than 10 cm and, more especially, no greater than 5 cm.

5. A process as claimed in claims 1 to 4, characterized in that the particulate catalyst starting material is applied in the form of a thin layer to a web-form support circulating in a reaction zone filled with a reducing gas phase and heated to temperatures of from about 200 to 350°C, the hot activated catalyst material is allowed to fall directly into a melt bath of the impregnating agent kept at a temperature of from about 50 to 120°C, the thoroughly impregnated catalyst material is removed, again preferably continuously, into a cooling zone filled with inert gas and is kept in that cooling zone until the impregnation has solidified.

6. A process as claimed in claims 1 to 5, characterized in that the catalyst material falling into the impregnation bath is guided onto a support which circulates through that bath and following inert gas zone and of which the speed of circulation and immersion length in the bath determine the residence time of the catalyst material in the impregnation bath.

7. A process as claimed in claims 1 to 6, characterized in that the mechanical size-reduction of the active catalyst stabilized with solidified impregnating material is carried out under conditions which preclude undesirable melting of the impregnating agent.

8. A process as claimed in claims 1 to 7, characterized in that tabletted, granulated or otherwise pelletized catalyst starting material is used.

9. A process as claimed in claims 1 to 8, characterized in that fatty alcohols having melting points of at least about 45°C are used.

10. A process as claimed in claims 1 to 9, characterized in that the particulate catalyst starting material used has an average particle size considerably larger than the particle size of powder and, more especially, in the range of from about 0.5 to 20 mm and preferably in the range of from about 2 to 10 mm.

## Revendications

1. Procédé de fabrication de masses de catalyseur stabilisées à l'état actif par activation de masses de départ de catalyseur dans un phase gazeuse réductrice, suivie de stabilisation de ces catalyseurs actifs par imprégnation par la masse fondue d'une substance solide inactive vis-à-vis du catalyseur actif, et consolidation subséquente par refroidissement de l'imprégnation de matière fondue, caractérisé en ce que pour préparer un catalyseur en morceaux activé renfermant éventuellement des composants d'hydrogénation métalliques pour la réduction d'esters d'acide gras et/ou d'acides gras, on fait passer dans les conditions de réaction de la phase d'activation une masse de départ de catalyseur en morceaux qui contient comme composant actif au moins un oxyde, un hydroxyde, un carbonate ou un carbonate basique d'un métal faisant partie du groupe se composant du cuivre, du zinc, du chrome et de l'aluminium par une zone de réaction remplie de la phase gazeuse réductrice et qui se trouve en contact direct avec une masse fondue d'une matière solide d'imprégnation, constituée d'un alcool gras ou d'un mélange d'alcools gras dont le point de fusion est d'au moins 40°C, en ce que l'on introduit la masse de catalyseur activé dans cette masse en fusion, en ce qu'on l'en retire à nouveau et en ce qu'on laisse la matière solide fondue se solidifier, et en ce que l'on broie mécaniquement le cas échéant la masse de catalyseur imprégnée.

2. Procédé selon la revendication 1, caractérisé en ce que l'on introduit la masse chaude de catalyseur, activée à des températures élevées, dans un bain plus froid de la matière solide d'imprégnation en fusion et en ce qu'on la laisse dans ledit bain jusqu'à imprégnation à cœur des particules de catalyseur.

3. Procédé selon les revendications 1 et 2, caractérisé en ce que l'intervalle de températures entre l'activation et l'imprégnation atteint au moins 80°C, de préférence au moins 120°C.

4. Procédé selon les revendications 1 à 3, caractérisé en ce que l'on fait passer la masse de catalyseur en morceaux, de préférence sous forme de comprimés, de pièces extrudées ou agglomérées en boulettes d'une autre manière, en couche constante à travers la zone d'activation remplie de gaz, en utilisant de préférence des épaisseurs de couche n'excédant pas 10 cm, en particulier n'excédant pas 5 cm.

5. Procédé selon les revendications 1 à 4, caractérisé en ce que la matière de départ de catalyseur en morceau est déposée en couche mince sur un support plat, qui est soumis à une rotation dans une chambre de réaction remplie d'une phase gazeuse réductrice et chauffée à des températures d'environ 200 à 350°C, en ce que la masse chaude de catalyseur activée tombe immédiatement dans un bain de matière d'imprégnation en fusion maintenu à une température d'environ 50 à 120°C, en ce que la matière de catalyseur imprégnée à cœur est transférée de préférence également de manière continue dans une zone de refroidissement remplie de gaz inerte où elle est maintenue jusqu'à la solidification de l'imprégnation.

6. Procédé selon les revendications 1 à 5, caractérisé en ce que la masse de catalyseur tombant dans le bain d'imprégnation est transportée sur un support soumis à une rotation dans ledit bain et dans la zone gazeuse inerte lui faisant suite, la vitesse de rotation et la distance d'immersion dans le bain dudit support déterminant le temps de séjour de la matière de catalyseur dans le bain d'imprégnation.

7. Procédé selon les revendications 1 à 6, caractérisé en ce que la masse de catalyseur stabilisée par la matière d'imprégnation solidifiée est soumise à un broiement mécanique, dans des conditions excluant une fusion indésirable de la masse d'imprégnation.

8. Procédé selon les revendications 1 à 7, caractérisé en ce que l'on met en œuvre une matière de départ de catalyseur formée en comprimés, en granulés ou agglomérée en boulettes d'une autre manière.

9. Procédé selon les revendications 1 à 8, caractérisé en ce que l'on met en œuvre des alcools gras dont le point de fusion atteint au moins 45°C environ.

10. Procédé selon les revendications 1 à 9, caractérisé en ce que l'on met en œuvre une masse de départ de catalyseur en morceaux dont les tailles moyennes de particules se situent nettement au-dessus de celles des particules de poudre et est comprise en particulier dans la plage s'étendant d'environ 0,5 à 20 mm, de préférence d'environ 2 à 10 mm.